Europäisches Patentamt

**European Patent Office**

Office européen des brevets

(11) Veröffentlichungsnummer: **0 197 509**
**B1**

(12) **EUROPÄISCHE PATENTSCHRIFT**

(45) Veröffentlichungstag der Patentschrifft:
21.03.90

(21) Anmeldenummer: **86104548.2**

(22) Anmeldetag: **03.04.86**

(51) Int. Cl. ⁵ : **H 02 M   7/523**

(54) Parallel-Schwingkreisumrichter, insbesondere zum induktiven Erwärmen von Werkstücken.

(30) Priorität: **06.04.85 DE 3512491**

(43) Veröffentlichungstag der Anmeldung:
**15.10.86 Patentblatt 86/42**

(45) Bekanntmachung des Hinweises auf die Patenterteilung:
**21.03.90 Patentblatt 90/12**

㊽ Bennante Vertragsstaaten:
**AT BE CH DE FR GB IT LI SE**

(56) Entgegenhaltungen:
**US-A-3 742 336**
**US-A-4 344 123**

(73) Patentinhaber: **AEG - Elotherm GmbH**
**Hammesberger Strasse 31**
**D-5630 Remscheid-Hasten (DE)**

(72) Erfinder: **Matthes, Hans Georg**
**Lukasstrasse 7**
**D-5632 Wermelskirchen (DE)**

(74) Vertreter: **Patentanwaltsbüro  Cohausz & Florack**
**Schumannstrasse 97**
**D-4000 Düsseldorf 1 (DE)**

LIBERGRAF, STOCKHOLM 1990

## Beschreibung

Die Erfindung bezieht sich auf einen Parallel-Schwingkreisumrichter mit mehreren eine Last bildenden Parallel-Schwingkreisen, insbesondere zum induktiven Erwärmen von Werkstücken durch die als Induktoren ausgebildeten Induktivitäten der Parallel-Schwingkreise, wobei parallel zu einem ersten Parallel-Schwingkreis über jeweils einen Schalter ein oder mehrere zusätzliche Kondensatoren, die insbesondere mit ein oder mehreren zusätzlichen, als Induktoren ausgebildeten Induktivitäten weitere Einzel-Parallel-Schwingkreise mit annähernd der Eigenfrequenz des ersten Parallel-Schwingkreises gleichen Eigenfrequenzen bilden, zu- und abschaltbar sind.

Beim induktiven Erwärmen von Werkstücken, insbesondere von Rohren oder Stangen im Durchlauf, ist man bestrebt, einen bestimmten Temperaturgradienten in dem Werkstück in dessen Längsrichtung zu erhalten. Beim Einsatz von mehreren am durchlaufenden Werkstück nacheinander wirksamen Induktoren läßt sich diese Forderung dadurch erfüllen, daß die einzelnen Induktoren in Abhängigkeit von der festgestellten Temperatur zu- oder abgeschaltet werden.

Bei einem bekannten, dafür geeigneten Parallel-Schwingkreisumrichter der eingangs genannten Art (DE-PS-3 220 142) erfolgt die Abschaltung einzelner Schwingkreise erst, wenn vorher der Parallel-Schwingkreisumrichter auf eine verminderte Ausgangsspannung eingestellt worden ist. Diese Art des Abschaltens ist aber nur solange möglich, wie mindestens ein Einzel-Schwingkreis noch eingeschaltet bleibt. Soll auch der letzte Schwingkreis abgeschaltet werden, muß vorher der Parallel-Schwingkreisumrichter ausgeschaltet sein. Auch das Zuschalten einzelner Schwingkreise ist in der Regel nur bei ausgeschaltetem Parallel-Schwingkreisumrichter möglich, weil sonst eine Kommutierung des Wechselrichters nicht sichergestellt ist.

Für die Kommutierung benötigt nämlich der Wechselrichter eine negative Sperrspannung. Eine solche negative Sperrspannung kann sich aber nicht aufbauen, wenn mit dem Zuschalten eines Einzel-Schwingkreises dessen ungeladener Kondensator dem im Betrieb befindlichen Schwingkreis parallelgeschaltet wird. Denn im Augenblick des Zuschaltens wird die Spannung des Kondensators des eingeschalteten Schwingkreises kurzschlußartig auf Null reduziert. Aus dem geladenen Kondensator fließt in den ungeladenen Kondensator so lange Ladestrom, bis beide Kondensatoren die gleiche Spannung haben. Abhängig von der Kapazität des Kondensators kann dieser Ladevorgang lange dauern, so daß sich für den vorgesehenen Augenblick der nächsten Kommutierung keine für die Thyristorlöschung ausreichend große negative Sperrspannung aufbauen kann. Das wiederum führt zu Fehlstarts bei der Kommutierung. Das Zuschalten von Einzel-Schwingkreisen erst nach Abschalten des Parallel-Schwingkreisumrichters bedeutet eine nicht unerhebliche Ausfallzeit für die induktive Erwärmung.

Problematisch ist beim induktiven Erwärmen von Werkstücken mittels eines Parallelschwingkreisumrichters die Anfangsphase der Aufheizung. Bei kaltem Werkstück ist der Lastwiderstand klein. Mit zunehmender Temperatur bis über den Curie-Punkt wird er größer. Für den Parallelschwingkreisumrichter bedeutet das, daß er in der Anfangsphase der Aufheizung dem Werkstück maximale Energie zuführt, in der zweiten Phase die Nennspannung bald erreicht ist und dann bei zunehmend wärmerem Werkstück die Stromaufnahme sich vermindert. Es ist deshalb wünschenswert, durch geeignete Beeinflussung des Parallelschwingkreises die Stromaufnahme durch Schaltungsmaßnahmen so zu beeinflussen, daß die Energiezufuhr mit maximalem Wirkungsgrad erfolgt.

Der Erfindung liegt die Aufgabe zugrunde, einen Parallelschwingkreisumrichter zu schaffen, der ein Zuschalten von Einzelschwingkreisen oder zusätzlichen Kondensatoren ohne vorherige Abschaltung des Parallelschwingkreisumrichters ermöglicht.

Diese Aufgabe wird erfindungsgemäß dadurch gelöst, daß jeder der zu- und abschaltbaren Kondensatoren bzw. Einzel-Parallel-Schwingkreise $C_0$, $L_0$; $C_1$, $L_1$; $C_2$, $L_2$ bei geöffnetem ersten Schalter $S_0$; $S_1$; $S_2$ über einen zweiten, in zeitlicher Abhängigkeit von den Kommutierungsimpulsen des thyristorisierten Wechselrichters (W) gesteuerten Schalters $T_{L0}$; $T_{L1}$; $T_{L2}$ an einen Reihen-Schwingkreis $C_L$, $L_L$ mit einem fremdgeladenen Kondensator $C_L$ anschließbar ist, derart, daß elektrische Energie von dem Reihen-Schwingkreis $C_L$; $L_L$ in einem Einschwingvorgang auf den zusätzlichen Kondensator bzw. einen der Parallel-Schwingkreise $C_0$, $L_0$; $C_1$, $L_1$; $C_2$, $L_2$ übertragen wird und bei gegenüber dem Anfang der Energieübertragung zeitverzögertem Zuschalten des Kondensators bzw. des Parallel-Schwingkreises $C_0$,$L_0$; $C_1$, $L_1$; $C_2$, $L_2$ durch den ersten Schalter $S_0$; $S_1$; $S_2$, dessen Spannung mit der Spannung an den bereits am Wechselrichter (W) angeschlossenen Parallel-Schwingkreis(en) und Kondensator(en) mindestens annähernd übereinstimmt, d.h. die über dem ersten Schalter $S_0$; $S_1$; $S_2$ liegende Spannung kurz vor dessen Zuschalten annähernd Null ist.

Bei dem erfindungsgemäßen Parallel-Schwingkreisumrichter läßt sich sehr schnell (Stromresonanz) aus dem Kondensator des Reihenschwingkreises elektrische Energie in den Kondensator des Parallel-Schwingkreises übertragen, so daß bei anschließendem Zuschalten des so mit Energie versorgten Kondensators praktisch kein Ladungsausgleich mehr zwischen den einzelnen Kondensatoren nötig ist. Die Gefahr von Fehlstarts bei der Umkommutierung besteht deshalb nicht mehr. Auch fallen keine Fehlzeiten mehr beim Zuschalten der einzelnen Schwingkreise an.

Die Übertragung elektrischer Energie von einem fremdgeladenen Kondensator auf den Kondensator des Parallel-Schwingkreises bei Parallel-Schwingkreisumrichtern bei denen die Induktivität des Schwingkreises als Induktor zum induktiven Erwärmen von Werkstücken eingesetzt wird, ist zwar bekannt, doch dient sie hier einem völlig anderen Zweck als bei der Erfindung (DD-PS-206 865). Bei diesem Stand der Technik wird vor dem Start des Parallel-Schwingkreisumrichters dem Parallel-Schwingkreis die Energie des fremdgeladenen Kondensators zugeführt, damit der Schwingkreis eine "Meßschwingung" ausführen kann. Die Meßschwingung wird benötigt, um die lastabhängige Eigenfrequenz und Dämpfung des Parallel-Schwingkreises festzustellen. Nur bei Kenntnis dieser Werte kann der Umrichter optimal gestartet werden. Bei diesem Stand der Technik wird also die Energie des fremdgeladenen Kondensators nicht, wie bei der Erfindung, unmittelbar zum Start beim Zuschalten einzelner Schwingkreise ausgenutzt.

Weitere Ausgestaltungen der Erfindung sind in den Unteransprüchen gekennzeichnet.

Im folgenden wird die Erfindung anhand einer ein Ausführungsbeispiel darstellenden Zeichnung näher erläutert.

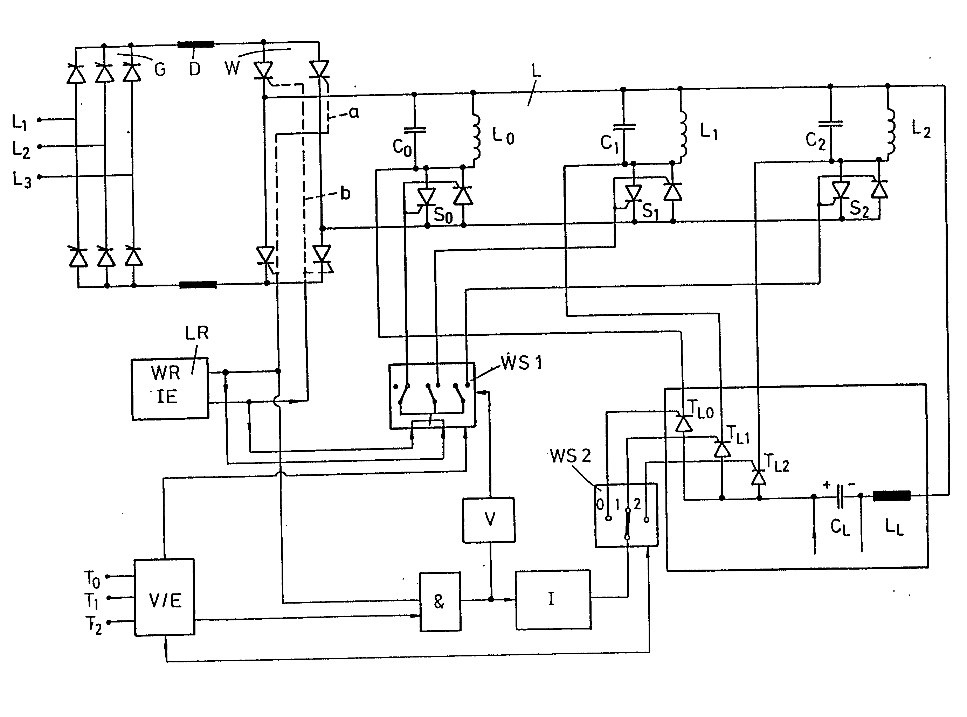

Der in der Zeichnung dargestellte Parallel-Schwingkreisumrichter besteht aus einem thyristorisierten Gleichrichter G, einem thyristorisierten Wechselrichter W und einem einzelne Parallel-Schwingkreise umfassenden Lastkreis L. Der Gleichrichter G und der Wechselrichter W sind über Glättungsdrosseln D miteinander verbunden. Dem Gleichrichter G ist eine in der Zeichnung nicht dargestellte Strom- und Spannungs-Regeleinrichtung zugeordnet, während dem Wechselrichter W ein Löschzeitregler LR zugeordnet ist. Ein solcher Parallel-Schwingkreisumrichter gehört seit langem zum Stand der Technik (vgl. AEG-Elotherm Sonderdruck aus Gießerei, Heft 11, Juni 1972 "Umrichtergespeiste Induktions-Schmelzöfen zur Rationalisierung des Erschmelzens von Stahlguß").

Die die Last L bildenden Parallel-Schwingkreise $C_0$, $L_0$, $C_1$, $L_1$ und $C_2$, $L_2$, deren Induktivitäten $L_0$, $L_1$ und $L_2$ zum Zwecke der Induktionserwärmung eines nicht dargestellten Werkstückes als Induktoren ausgebildet sind, liegen parallel am Wechselrichter W. Mittels steuerbarer Schalter $S_0$, $S_1$, $S_2$ sind sie einzeln an den Wechselrichter W anschaltbar bzw. von ihm abschaltbar. Die Ansteuerung dieser Schalter $S_0$, $S_1$ und $S_2$ erfolgt mittels einer noch im einzelnen zu beschreibenden Steuereinrichtung in Abhängigkeit von der Temperatur des Werkstückes. Das Prinzip einer solchen Einrichtung ist an sich bekannt (DE-PS-3 220 142).

Die Steuereinrichtung umfaßt ein Vergleichs- und Entscheidungsglied, dem einmal die Temperaturen $T_0$, $T_1$, $T_2$ des Werkstückes an den Induktoren $L_0$, $L_1$, $L_2$ als Ist-Werte und entsprechende Vergleichswerte zugeführt werden. In Abhängigkeit von der Soll-Ist-Wertabweichung gibt das Vergleichs- und Entscheidungsglied V/E Steuersignale an einen ersten Wahlschalter WS1 und einen zweiten Wahlschalter WS2. Über den Wahlschalter WS1 gelangen gleichzeitig an beide Zündelektroden der die Schalter $S_0$, $S_1$, $S_2$ bildenden antiparallelgeschalteten Thyristoren des jeweils ausgewählten Schalters $S_0$, $S_1$, $S_2$ Zündimpulse, die von den dem Wechselrichter W von der Löschzeit-Regeleinrichtung LR zugeführten Zündimpulsen abgeleitet sind. Dabei erhalten beide Thyristoren des ausgewählten Schalters $S_0$, $S_1$ oder $S_2$ sowohl bei der Ansteuerung der einen als auch der anderen Diagonalen des Wechselrichters W Zündimpulse.

In Abhängigkeit von der Ansteuerung des Vergleichs- und Entscheidungsgliedes V/E gelangen Zündimpulse, die von den einer Diagonalen des Wechselrichters W von der Löschzeit-Regeleinrichtung LR zugeführten Impulse abgeleitet sind, an die Zündelektrode eines Thyristorschalters $TL_0$, $TL_1$, $TL_2$. Über diese Schalter $TL_0$, $TL_1$, $TL_2$ ist ein Reihen-Schwingkreis $C_L$, $L_L$ an jeweils einen der Einzel-Schwingkreise $C_0$, $L_0$, $C_1$, $L_1$, $C_2$, $L_2$ anschließbar. Der Kondensator $C_L$ dieses Reihen-Schwingkreises ist fremdgeladen. Die Eigenfrequenz des Reihen-Schwingkreises $C_L$, $L_L$ ist auf die Eigenfrequenz der Einzel-Schwingkreise $C_0$, $L_0$, $C_1$, $L_1$, $C_2$, $L_2$ abgestimmt, so daß nach Anschluß des Reihen-Schwingkreises an einen nicht im Betrieb befindlichen Parallel-Schwingkreis die Entladung sich in Form eines Einschwingvorganges etwa mit einer Eigenfrequenz vollzieht, die gleich der Eigenfrequenz des Einzel-Schwingkreises ist.

Das Vergleichs- und Entscheidungsglied V/E liefert an ein UND-Glied & einen Steuerimpuls, wenn ein weiterer Parallel-Schwingkreis abgeschaltet bzw. zugeschaltet werden soll. Das UND-Glied & liefert ein Ausgangssignal, sobald es von der Löschzeit-Regeleinrichtung LR einen Zündimpuls empfängt. Das Ausgangssignal steuert einen Impulsgeber I an, der entsprechend der Stellung des Wahlschalters WS2 Zündimpulse an die Schalter $TL_0$, $TL_1$, $TL_2$ liefert. Das Ausgangssignal des UND-Gliedes & gelangt außerdem über ein Verzögerungsglied V an den Wahlschalter WS1. Das Verzögerungsglied V sorgt dafür, daß über den Wahlschalter WS1 die zum Starten eines Einzelschwingkreises $S_0$, $S_1$, $S_2$ benötigten Zündimpulse erst geliefert werden, wenn der zuzuschaltende Einzel-Schwingkreis vom Parallel-Schwingkreis $C_L$, $L_L$ geladen worden ist, das ist etwa nach einer halben Periode.

Danach ist das Verzögerungsglied V nicht mehr wirksam, so daß die Zündimpulse der Löschzeit-Regeleinrichtung LR für beide Diagonalen synchron an die antiparallelen Thyristoren der Schalter $S_0$, $S_1$, $S_2$ gelangen.

Mit dem erfindungsgemäßen Parallel-Schwingkreisumrichter läßt sich somit jeder weitere Einzel-Schwingkreis zuschalten, ohne daß dafür der Umrichter abgeschaltet werden muß und ohne daß dadurch Schwierigkeiten bei der Umkommutierung des Wechselrichters entstehen. Die Steuerung der Ausgangsspannung des Umrichters in Abhängigkeit von der Größe der angeschalteten Last über den nicht dargestellten Strom- und Spannungsregler erfolgt davon unabhängig in der bekannten Art und Weise.

**Patentansprüche**

1. Parallel-Schwingkreisumrichter mit mehreren eine Last bildenden Parallel-Schwingkreisen, $C_0$, $L_0$; $C_1$, $L_1$; $C_2$, $L_2$) insbesondere zum induktiven Erwärmen von Werkstücken durch die als Induktoren ausgebildeten Induktivitäten ($L_0$, $L_1$, $L_2$) der Parallel-Schwingkreise, wobei parallel zu einem ersten Parallel-Schwingkreis über jeweils einen Schalter ($S_0$, $S_1$, $S_2$) ein oder mehrere zusätzliche Kondensatoren, die insbesondere mit ein oder mehreren zusätzlichen, als Induktoren ausgebildeten Induktivitäten weitere Einzel-Parallel-Schwingkreise mit annähernd der Eigenfrequenz des ersten Parallel-Schwingkreises gleichen Eigenfrequenzen bilden, zu- und abschaltbar sind, *dadurch gekennzeichnet,* daß jeder der zu- und abschaltbaren Kondensatoren bzw. Einzel-Parallel-Schwingkreise ($C_0$, $L_0$; $C_1$, $L_1$; $C_2$, $L_2$) bei geöffnetem ersten Schalter ($S_0$; $S_1$; $S_2$) über einen zweiten, in zeitlicher Abhängigkeit von den Kommutierungsimpulsen des thyristorisierten Wechselrichters (W) gesteuerten Schalters ($T_{L0}$; $T_{L1}$; $T_{L2}$) an einen Reihen-Schwingkreis ($C_L$, $L_L$) mit einem fremdgeladenen Kondensator ($C_L$) anschließbar ist, derart, daß elektrische Energie von dem Reihen-Schwingkreis ($C_L$; $L_L$) in einem Einschwingvorgang auf den zusätzlichen Kondensator bzw. einen der Parallel-Schwingkreise ($C_0$, $L_0$; $C_1$, $L_1$; $C_2$, $L_2$) übertragen wird und bei gegenüber dem Anfang der Energieübertragung zeitverzögertem Zuschalten des Kondensators bzw. des Parallel-Schwingkreises ($C_0$, $L_0$; $C_1$, $L_1$; $C_2$, $L_2$) durch den ersten Schalter ($S_0$; $S_1$; $S_2$), dessen Spannung mit der Spannung an den bereits am Wechselrichter (W) angeschlossenen Parallel-Schwingkreis(en) und Kondensator(en) mindestens annähernd übereinstimmt, d.h. die über dem ersten Schalter ($S_0$; $S_1$; $S_2$) liegende Spannung kurz vor dessen Zuschalten annähernd Null ist.

2. Parallel-Schwingkreisumrichter nach Anspruch 1, *dadurch gekennzeichnet,* daß der zweite Schalter ($T_{L0}$; $T_{L1}$; $T_{L2}$) aus mehreren Thyristoren besteht und jeder Parallel-Schwingkreis ($C_0$, $L_0$; $C_1$, $L_1$; $C_2$, $L_2$) über jeweils einen der Thyristoren an den Reihen-Schwingkreis ($C_L$, $L_L$) anschließbar ist.

3. Parallel-Schwingkreisumrichter nach Anspruch 1 oder 2, *dadurch gekennzeichnet,* daß der erste Schalter ($S_0$; $S_1$; $S_2$) eines jeden Parallel-Schwingkreises ($C_0$, $L_0$; $C_1$, $L_1$; $C_2$, $L_2$) aus zwei antiparallelgeschalteten Thyristoren besteht, die bei jeder Kommutierung gleichzeitig Zündimpulse erhalten.

4. Parallel-Schwingkreisumrichter nach einem der Ansprüche 1 bis 3, *dadurch gekennzeichnet,* daß von den Kommutierungsimpulsen derjenigen Diagonalen des Wechselrichters (W) die Zündimpulse für den zweiten Schalter ($T_{L0}$; $T_{L1}$, $T_{L2}$) abgeleitet sind, die zu einer phasen- und polaritätsgleichen Aufladung der Kondensatoren ($C_0$; $C_1$;

$C_2$) der Parallel-Schwingkreise ($C_0$; $L_0$; $C_1$, $L_1$; $C_2$, $L_2$) durch den Wechselrichter (W) und den fremdgeladenen Kondensator ($C_L$) führt.

**Claims**

1. A parallel-oscillating circuit converter having a number of parallel-oscillating circuits forming a load, more particularly for the inductive heating of workpieces by the inductances ($L_0$, $L_1$, $L_2$), taking the form of inductors, of the parallel-oscillating circuits, wherein one or more additional capacitors which form, more particularly with one or more additional inductances, taking the form of inductors, further individual parallel-oscillating circuits having inherent frequencies substantially equal to the inherent frequency of the first parallel-osillating circuit can each be connected and disconnected in parallel with the first parallel-oscillating circuit via a switch ($S_0$, $S_1$, $S_2$), characterized in that each of the connectable and disconnectable capacitors and individual parallel-oscillating circuits ($C_0$, $L_0$; $C_1$, $L_1$; $C_2$, $L_2$) can when the first switch ($S_0$; $S_1$; $S_2$) is opened be so connected via a second switch ($T_{L0}$; $T_{L1}$; $T_{L2}$), controlled in time dependence by the switching pulses of the thyristorized inverted rectifier (W), to a series oscillating circuit ($C_L$, $L_L$) with an externally charged capacitor ($C_L$) that electrical energy is transmitted by the series oscillating circuit ($C_L$; $L_L$) in an enabling transient to the additional capacitor and one of the parallel-oscillating circuits ($C_0$, $L_0$; $C_1$, $L_1$; $C_2$, $L_2$) and when the capacitor and the parallel-oscillating circuit ($C_0$, $L_0$; $C_1$, $L_1$; $C_2$, $L_2$) are connected via the first switch ($S_0$; $S_1$; $S_2$) with delay in relation to the start of energy transmission, its voltage at least substantially corresponds to the voltage at the or each parallel-oscillating circuit and the or each capacitor already connected to the inverted rectifier (W) – i.e., the voltage across the first switch ($S_0$; $S_1$; $S_2$) is prior to its connection substantially zero.

2. A parallel-oscillating circuit converter according to claim 1, characterized in that the second switch ($T_{L0}$; $T_{L1}$; $T_{L2}$) consists of a number of thyristors and each parallel-oscillating circuit ($C_0$; $L_0$; $C_1$; $L_1$; $C_2$; $L_2$) can be connected via one of the thyristors to the series oscillating circuit ($C_L$; $L_L$).

3. A parallel-oscillating circuit converter according to claims 1 or 2, characterized in that the first switch ($S_0$; $S_1$; $S_2$) of each parallel-oscillating circuit ($C_0$; $L_0$; $C_1$; $L_1$; $C_2$; $L_2$) comprises two antiparallel-connected thyristors, which simultaneously receive firing pulses at each switching.

4. A parallel-oscillating circuit converter according to one of claims 1 to 3, characterized in that the firing pulses for the second switch ($T_{L0}$; $T_{L1}$; $T_{L2}$) are derived from the switching pulses of that diagonal of the inverted rectifier (W) which leads to a charging of identical phase and polarity of the capacitors ($C_0$; $C_1$; $C_2$) of the parallel-oscillating

circuits ($C_0$; $L_0$; $C_1$; $L_1$; $C_2$; $L_2$) by the inverted rectifier (W) and the externally charged capacitor ($C_L$).

## Revendications

1. Convertisseur pour circuit oscillant en parallèle avec plusieurs circuits oscillants en parallèle ($C_0$, $L_0$; $C_1$, $L_1$; $C_2$, $L_2$) formant une résistance de charge, en particulier pour le chauffage par induction de pièces à travailler par les inductances ($L_0$), $L_1$, $L_2$ des circuits oscillants en parallèle formées par des inducteurs, un ou plusieurs condensateurs supplémentaires, qui forment en particulier, avec une ou plusieurs inductances supplémentaires formées par des inducteurs, d'autres circuits oscillants en parallèle individuels avec des fréquences propres approximativement égales à la fréquence propre du premier circuit oscillant en parallèle, pouvant être mis en circuit ou hors circuit en parallèle avec un premier circuit oscillant en parallèle par l'intermédiaire d'un interrupteur ($S_0$, $S_1$, $S_2$) respectivement, caractérisé en ce que chacun des condensateurs ou circuits oscillants en parallèle individuels ($C_0$, $L_0$; $C_1$, $L_1$; $C_2$, $L_2$), le premier interrupteur ($S_0$, $S_1$, $S_2$) étant ouvert, peut être raccordé à un circuit oscillant en série ($C_L$, $L_L$) avec un condensateur ($C_L$) chargé séparément, par l'intermédiaire d'un deuxième interrupteur ($T_{L0}$; $T_{L1}$; $T_{L2}$) commandé en fonction du temps par les impulsions de commutation de l'onduleur (W) thyristorisé, de telle manière que de l'énergie électrique du circuit oscillant en série ($C_L$; $L_L$) est transférée par un phénomène transitoire au condensateur supplémentaire ou à l'un des circuits oscillants en parallèle ($C_0$, $L_0$; $C_1$, $L_1$; $C_2$, $L_2$), et lors de la fermeture, décalée dans le temps par rapport au début du transfert d'énergie, du condensateur ou du circuit oscillant en parallèle ($C_0$, $L_0$; $C_1$, $L_1$; $C_2$, $L_2$), par le premier interrupteur ($S_0$, $S_1$, $S_2$) dont la tension est approximativement égale à la tension au(x) circuit(s) oscillant(s) en parallèle et condensateur(s) déjà raccordés à l'onduleur (W), c'est-à-dire que la tension aux bornes du premier interrupteur ($S_0$, $S_1$, $S_2$) est approximativement nulle peu avant sa fermeture.

2. Convertisseur pour circuit oscillant en parallèle selon la revendication 1, caractérisé en ce que le deuxième interrupteur ($T_{L0}$; $T_{L1}$; $T_{L2}$) est constitué de plusieurs thyristors et chaque circuit oscillant en parallèle ($C_0$, $L_0$; $C_1$, $L_1$; $C_2$, $L_2$), peut être raccordé au circuit oscillant en série ($C_L$, $L_L$) respectivement par l'un des thyristors.

3. Convertisseur pour circuit oscillant en parallèle selon la revendication 1 ou 2, caractérisé en ce que le premier interrupteur ($S_0$, $S_1$, $S_2$) de chacun des circuits oscillants en parallèle ($C_0$, $L_0$; $C_1$, $L_1$; $C_2$, $L_2$) est constitué de deux thyristors montés antiparallèlement qui reçoivent simultanément des impulsions d'allumage à chaque commutation.

4. Convertisseur pour circuit oscillant en parallèle selon l'une des revendications 1 à 3, caractérisé en ce que les impulsions d'allumage pour le deuxième interrupteur ($T_{L0}$; $T_{L1}$; $T_{L2}$) sont dérivées des impulsions de commutation de celle des diagonales de l'onduleur (W) qui conduit à une charge de mêmes phase et polarité des condensateurs ($C_0$, $C_1$, $C_2$) des circuits oscillants en parallèle ($C_0$, $L_0$; $C_1$, $L_1$; $C_2$, $L_2$) par l'onduleur (W) et le condensateur ($C_L$) chargé séparément.

EP 0 197 509 B1